(19) Europäisches Patentamt
European Patent Office
Office européen des brevets

(11) **EP 4 266 398 A1**

(12) **EUROPEAN PATENT APPLICATION**
published in accordance with Art. 153(4) EPC

(43) Date of publication:
**25.10.2023 Bulletin 2023/43**

(21) Application number: **22871155.2**

(22) Date of filing: **21.12.2022**

(51) International Patent Classification (IPC):
*H01M 4/13* (2010.01)   *H01M 10/0525* (2010.01)
*H01M 10/0587* (2010.01)

(52) Cooperative Patent Classification (CPC):
Y02E 60/10; Y02P 70/50

(86) International application number:
**PCT/CN2022/140581**

(87) International publication number:
**WO 2023/160181 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 CN 202210189715**

(71) Applicant: **Ningde Amperex Technology Limited Ningde City, 352100 (CN)**

(72) Inventors:
• **TAO, Wei**
  **Ningde**
  **Fujian 352100 (CN)**
• **LIN, Zhaohan**
  **Ningde**
  **Fujian 352100 (CN)**
• **WU, Fei**
  **Ningde**
  **Fujian 352100 (CN)**

(74) Representative: **Icosa**
  **83 avenue Denfert-Rochereau**
  **75014 Paris (FR)**

(54) **ELECTROCHEMICAL DEVICE AND ELECTRONIC DEVICE**

(57)      Some embodiments of this application provide an electrochemical apparatus and an electronic apparatus. The electrochemical apparatus includes a positive electrode plate and a negative electrode plate. The positive electrode plate includes a positive electrode active material layer. The negative electrode plate includes a negative electrode current collector, a first negative electrode active material layer, and a second negative electrode active material layer, and the first negative electrode active material layer is provided between the negative electrode current collector and the second negative electrode active material layer. The first negative electrode active material layer has a first edge and a second edge in a length direction of the negative electrode plate, the second negative electrode active material layer has a third edge and a fourth edge, and the positive electrode active material layer has a fifth edge and a sixth edge. The first edge exceeds the third edge and the fifth edge in the length direction. A distance between the third edge and the fifth edge in the length direction is less than 2 mm. This application reduces the thickness of the negative electrode active material layer providing no capacity and improves the energy density of the electrochemical apparatus.

FIG. 1

**Description**

**CROSS-REFERENCE TO RELATED APPLICATIONS**

This application claims priority to Chinese Patent Application No. 202210189715.0, filed on February 28, 2022 and entitled "ELECTROCHEMICAL APPARATUS AND ELECTRONIC APPARATUS", which is incorporated herein by reference in its entirety.

**TECHNICAL FIELD**

This application relates to the field of electrochemical energy storage, and specifically, to an electrochemical apparatus and an electronic apparatus.

**BACKGROUND**

As electrochemical energy storage technologies develop, increasingly high requirements are imposed on the safety performance and energy density of electrochemical apparatuses (for example, lithium-ion batteries). Further improvement in this aspect is expected.

**SUMMARY**

This application provides an electrochemical apparatus. The electrochemical apparatus includes a positive electrode plate and a negative electrode plate. The positive electrode plate includes a positive electrode active material layer. The negative electrode plate includes a negative electrode current collector, a first negative electrode active material layer, and a second negative electrode active material layer, and the first negative electrode active material layer is provided between the negative electrode current collector and the second negative electrode active material layer. The first negative electrode active material layer has a first edge and a second edge in a length direction of the negative electrode plate, the second negative electrode active material layer has a third edge and a fourth edge in the length direction, and the positive electrode active material layer has a fifth edge and a sixth edge in the length direction. The first edge, the third edge, and the fifth edge are located on one side, and the second edge, the fourth edge, and the sixth edge are located on the opposite side. The first edge exceeds the third edge and the fifth edge in the length direction. A distance between the third edge and the fifth edge in the length direction is less than 2 mm.

In some embodiments, the distance between the third edge and the fifth edge in the length direction is 0. In some embodiments, the second edge exceeds the fourth edge and the sixth edge in the length direction. In some embodiments, a distance between the fourth edge and the sixth edge in the length direction is less than 2 mm. In some embodiments, the distance between the fourth edge and the sixth edge in the length direction is 0. In some embodiments, thickness of the second negative electrode active material layer is greater than thickness of the first negative electrode active material layer. In some embodiments, a distance between the first edge and the fifth edge in the length direction is 2 mm to 8 mm. In some embodiments, a distance between the second edge and the sixth edge in the length direction is 2 mm to 8 mm.

An embodiment of this application further provides an electronic apparatus including the foregoing electrochemical apparatus.

In this application, with the first edge exceeding the third edge and the fifth edge in the length direction, lithium ions released from the positive electrode plate can be intercalated in the first negative electrode active material layer, avoiding precipitation of lithium on the negative electrode plate. In addition, with the third edge and the fifth edge substantially aligned in the length direction, the thickness of the negative electrode active material layer providing no capacity is reduced, thereby improving the energy density of the electrochemical apparatus.

**BRIEF DESCRIPTION OF DRAWINGS**

FIG. 1 is a sectional view of a portion of an electrochemical apparatus along a length direction of a negative electrode plate according to some embodiments.

FIG. 2 is a sectional view of a portion of an electrochemical apparatus along a length direction of a negative electrode plate according to some embodiments.

## DESCRIPTION OF EMBODIMENTS

The following embodiments may help persons skilled in the art to understand this application more comprehensively, but do not limit this application in any manner.

For the design of electrochemical apparatuses (for example, lithium-ion batteries), sufficient space needs to be left in the negative electrode plate for all lithium deintercalated from the positive electrode plate to be intercalated into the negative electrode active material, so the length and/or width of the negative electrode plate typically exceeds the corresponding length and/or width of the positive electrode plate to avoid precipitation of lithium or short circuit caused by the positive electrode plate exceeding the negative electrode plate. However, the portion of the negative electrode plate exceeding the positive electrode plate provides no capacity, but has thickness and mass, resulting in a loss of volumetric and mass energy density of the electrochemical apparatus. In addition, generally, edge bulging is likely to occur during the processing of the negative electrode plate, making height of the edge larger than height of the middle body. If both the middle body and the edge part are rolled to the same thickness in cold pressing, edge overpressing is likely to occur, leading to the precipitation of lithium in the middle and late stages of cycling of the electrochemical apparatus. If the middle body and the edge part are not rolled to the same thickness, their interface will have a non-uniform thickness, purple spots, or other issues. Therefore, it is important to alleviate edge bulging in the coating process.

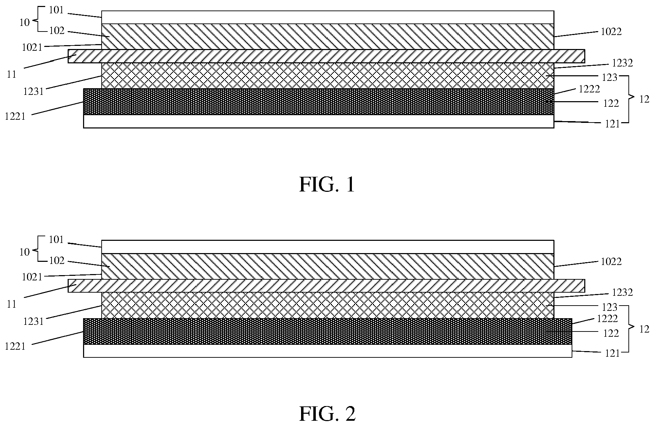

As shown in FIG. 1, some embodiments of this application provide an electrochemical apparatus. The electrochemical apparatus includes a positive electrode plate 10 and a negative electrode plate 12. In some embodiments, the positive electrode plate 10 and the negative electrode plate 12 are separated by a separator 11 disposed between the positive electrode plate 10 and the negative electrode plate 12. In some embodiments, the positive electrode plate 10 includes a positive electrode active material layer 102. In some embodiments, the positive electrode plate 10 may further include a positive electrode current collector 101. The positive electrode active material layer 102 may be disposed on one or two sides of the positive electrode current collector 101.

In some embodiments, the negative electrode plate 12 includes a negative electrode current collector 121, a first negative electrode active material layer 122 and a second negative electrode active material layer 123, and the first negative electrode active material layer 122 is provided between the negative electrode current collector 121 and the second negative electrode active material layer 123. It should be understood that although in FIG. 1, the first negative electrode active material layer 122 and the second negative electrode active material layer 123 are illustrated on one side of the negative electrode current collector 121, it is merely an example, and the first negative electrode active material layer 122 and the second negative electrode active material layer 123 may be provided on two sides of the negative electrode current collector 121.

In some embodiments, as shown in FIG. 1, the first negative electrode active material layer 122 has a first edge 1221 and a second edge 1222 in a length direction of the negative electrode plate 12 (horizontal direction from left to right in FIG. 1), the second negative electrode active material layer 123 has a third edge 1231 and a fourth edge 1232 in the length direction, and the positive electrode active material layer 102 has a fifth edge 1021 and a sixth edge 1022 in the length direction. In some embodiments, the first edge 1221, the third edge 1231, and the fifth edge 1021 are located on one side, and the second edge 1222, the fourth edge 1232, and the sixth edge 1022 are located on the opposite side.

In some embodiments, as shown in FIG. 1, the first edge 1221 exceeds the third edge 1231 and the fifth edge 1021 in the length direction (horizontal direction from left to right in FIG. 1). In some embodiments, the third edge 1231 is aligned with the fifth edge 1021, but in consideration of process errors, the third edge 1231 can be considered aligned with the fifth edge 1021 given that a distance between the third edge 1231 and the fifth edge 1021 in the length direction is less than 2 mm. In some embodiments, the distance between the third edge 1231 and the fifth edge 1021 in the length direction is 0, that is, they are ideally aligned.

With the first edge 1221 exceeding the third edge 1231 and the fifth edge 1021 in the length direction, lithium ions released from the positive electrode active material layer 102 can be intercalated in the first negative electrode active material layer 122, avoiding precipitation of lithium on the negative electrode plate 12. In addition, with the third edge 1231 and the fifth edge 1021 substantially aligned in the length direction, the thickness of the negative electrode active material layer (for example, the second negative electrode active material layer 123) providing no capacity is reduced, thereby improving the energy density of the electrochemical apparatus. Therefore, the electrochemical apparatus in this application avoids the precipitation of lithium on the negative electrode plate and minimizes the adverse effect on the energy density of the electrochemical apparatus.

If the third edge 1231 of the second negative electrode active material layer 123 is indented relative to the fifth edge 1021 of the positive electrode active material layer 102, lithium ions deintercalated from the edge region of the positive electrode plate cannot be all stored at the negative electrode plate, leading to precipitation of lithium at the negative electrode plate, affecting the cycling performance of the electrochemical apparatus, and even causing short circuits or safety problems. On the other hand, if the third edge 1231 of the second negative electrode active material layer 123 exceeds the fifth edge 1021 of the positive electrode active material layer 102, the portion of the second negative electrode active material layer 123 of the negative electrode plate 12 exceeding the positive electrode plate 10 has thickness. After winding, in the core structure, the third edge 1231 and the first edge 1221 are located at the winding start position and terminating position of the core. The exceeding portion does not provide capacity but has a specific thickness, and therefore a specific energy density is costed.

In a width direction of the negative electrode plate 12, it is also possible to make the upper layer coating width smaller than the lower layer coating width, to significantly alleviate edge bulging in the coating process. Therefore, the coating thickness of the edge of the negative electrode plate 12 is smaller than the coating thickness of the main body, which is less likely to cause edge bulging. In addition, in the width direction of the negative electrode plate 12, the negative electrode plate exceeds may alternatively be designed to exceed the positive electrode plate in width. In this technical solution, the second negative electrode active material layer 123 of the negative electrode plate 12 is aligned with the positive electrode active material layer 102, and the first negative electrode active material layer 122 exceeds the positive electrode active material layer 102, providing sufficient misalignment space and also alleviating processing and cycling problems.

In some embodiments, as shown in FIG. 2, the second edge 1222 exceeds the fourth edge 1232 and the sixth edge 1022 in the length direction. In this way, the exceeding second negative electrode active material layer 123 can better receive lithium ions released from the positive electrode active material layer 102, thereby avoiding precipitation of lithium on the negative electrode plate 12.

In some embodiments, the fourth edge 1232 is aligned with the sixth edge 1022, but in consideration of process errors, the fourth edge 1232 can be considered aligned with the sixth edge 1022 given that a distance between the fourth edge 1232 and the sixth edge 1022 in the length direction is less than 2 mm. In some embodiments, the distance between the fourth edge 1232 and the sixth edge 1022 in the length direction is 0, that is, they are ideally aligned. With the fourth edge 1232 and the sixth edge 1022 substantially aligned in the length direction, the thickness of the negative electrode active material layer (for example, the second negative electrode active material layer 123) providing no capacity is reduced, thereby improving the energy density of the electrochemical apparatus. Therefore, the electrochemical apparatus in this application avoids the precipitation of lithium on the negative electrode plate and minimizes the adverse effect on the energy density of the electrochemical apparatus.

In some embodiments, thickness of the second negative electrode active material layer 123 is greater than thickness of the first negative electrode active material layer 122. In this way, as compared with all the cases where the second negative electrode active material layer 123 and the first negative electrode active material layer 122 are in excess, the thicker second negative electrode active material layer 123 being aligned with the positive electrode active material layer 102 can better reduce the thickness, thereby further improving the energy density of the electrochemical apparatus while alleviating the precipitation of lithium on the negative electrode plate.

In some embodiments, a distance between the first edge 1221 and the fifth edge 1021 in the length direction is 2 mm to 8 mm. In some embodiments, a distance between the second edge 1222 and the sixth edge 1022 in the length direction is 2 mm to 8 mm. If the distance between the first edge 1221 and the fifth edge 1021 in the length direction or the distance between the second edge 1222 and the sixth edge 1022 in the length direction is too small, the exceeding first negative electrode active material layer 122 will not be able to effectively receive lithium ions released from the positive electrode active material layer 102. If the distance between the first edge 1221 and the fifth edge 1021 in the length direction or the distance between the second edge 1222 and the sixth edge 1022 in the length direction is too large, the space occupied by the first negative electrode active material layer 122 providing no capacity may be unnecessarily wasted, adversely affecting the energy density of the electrochemical apparatus.

In some embodiments, the positive electrode current collector 101 may be an aluminum foil, and certainly may be other positive electrode current collectors commonly used in the art. In some embodiments, thickness of the positive electrode current collector may range from 1 $\mu$m to 50 $\mu$m. In some embodiments, the positive electrode active material layer 102 may be applied only on part of the positive electrode current collector 101.

In some embodiments, the positive electrode active material layer 102 may include a positive electrode active material, a conductive agent, and a binder. In some embodiments, the positive electrode active material may include at least one of lithium cobaltate, lithium iron phosphate, lithium aluminate, lithium manganese or nickel cobalt lithium manganate. In some embodiments, the conductive agent of the positive electrode plate 10 may include at least one of conductive carbon black, laminated graphite, graphene, or carbon nanotube. In some embodiments, the binder in the positive electrode plate 10 may include at least one of polyvinylidene fluoride, a vinylidene fluoride-hexafluoropropylene copolymer, styrene-acrylate copolymer, styrene-butadiene copolymer, polyamide, polyacrylonitrile, polyacrylate, polyacrylic acid, polyacrylate, sodium carboxymethylcellulose, polyvinyl acetate, polyvinylpyrrolidone, polyvinyl ether, polymethyl methacrylate, polytetrafluoroethylene, or polyhexafluoropropylene. In some embodiments, a mass ratio of the positive electrode active material, the conductive agent, and the binder in the positive electrode active material layer 102 is (80-99):(0.1-10):(0.1-10). However, this is merely an example and any other suitable mass ratio can be used.

In some embodiments, the first negative electrode active material layer 121 and the second negative electrode active material layer 122 may both include a negative electrode active material, a conductive agent, and a binder. In some embodiments, the negative electrode active material may include at least one of graphite or a silicon-based material. In some embodiments, the silicon-based material includes at least one of silicon, silicon-oxygen material, silicon-carbon material, or silicon-oxygen-carbon material. In some embodiments, the conductive agent in the first negative electrode active material layer 121 and the second negative electrode active material layer 122 may include at least one of conductive carbon black, Ketjen black, laminated graphite, graphene, carbon nanotube, or carbon fiber. In some embodiments, the binder in the first negative electrode active material layer 121 and the second negative electrode active material layer 122 may include at least one of carboxymethyl cellulose (CMC), polyacrylic acid, polyvinylpyrrolidone, polyaniline, polyimide, polyamideimide, polysiloxane, styrene-butadiene rubber, epoxy resin, polyester resin, polyurethane resin, or polyfluorene. In some embodiments, a mass ratio of the negative electrode active material, the conductive agent, and the binder in the first negative electrode active material layer 121 and the second negative electrode active material layer 122 may be (78-98.5):(0.1-10):(0.1-10). It should be understood that the foregoing description is only an example. Any other appropriate materials and mass ratios may be used. In some embodiments, the type and formula of the negative electrode active material of the first negative electrode active material layer 121 and the second negative electrode active material layer 122 may be the same or different. In some embodiments, the negative electrode current collector 121 may be at least one of a copper foil current collector, a nickel foil current collector, or a carbon-based current collector.

In some embodiments, the separator 11 includes at least one of polyethylene, polypropylene, polyvinylidene fluoride, polyethylene terephthalate, polyimide, or aramid. For example, polyethylene is selected from at least one of high-density polyethylene, low-density polyethylene, or ultra-high molecular weight polyethylene. Especially, polyethylene and polypropylene have a good effect on preventing short circuits and can improve stability of a battery through a shutdown effect. In some embodiments, thickness of the separator 11 ranges from approximately 3 $\mu$m to 20 $\mu$m.

In some embodiments, the separator 11 may further include a porous layer on the surface. The porous layer is disposed on at least one surface of the separator. The porous layer includes inorganic particles and the binder. The inorganic particles are selected from at least one of aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), cerium dioxide ($CeO_2$), nickel oxide (NiO), zinc oxide (ZnO), calcium oxide (CaO), zirconia oxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, a pore diameter of the separator ranges from approximately 0.01 $\mu$m to 1 $\mu$m. The binder in the porous layer is selected from at least one of polyvinylidene fluoride, vinylidene fluoride-hexafluoropropylene copolymer, polyamide, polyacrylonitrile, polyacrylic ester, polyacrylic acid, a polyacrylic salt, carboxyl methyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance binding between the separator and the electrode plate.

In some embodiments, the electrochemical apparatus includes a lithium-ion battery. However, this application is not limited thereto. In some embodiments, the electrochemical apparatus further includes an electrolyte, where the electrolyte includes at least one of fluoroether, fluoroethylene carbonate, or ether nitrile. In some embodiments, the electrolyte further includes a lithium salt. The lithium salt includes lithium bis(fluorosulfonyl)imide and lithium hexafluorophosphate. Concentration of the lithium salt ranges from 1 mol/L to 2 mol/L, and the mass ratio of the lithium bis(fluorosulfonyl)imide to the lithium hexafluorophosphate ranges from 0.06 to 5. In some embodiments, the electrolyte may further include a non-aqueous solvent. The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

Examples of the linear carbonate compound are diethyl carbonate (DEC), dimethyl carbonate (DMC), dipropyl carbonate (DPC), methyl propyl carbonate (MPC), ethyl propyl carbonate (EPC), methyl ethyl carbonate (MEC), and combinations thereof. Examples of the cyclic carbonate compound are ethylene carbonate (EC), propylene carbonate (PC), butylene carbonate (BC), vinyl ethylene carbonate (VEC), and combinations thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, and combinations thereof.

Examples of the carboxylate compound are methyl acetate, ethyl acetate, n-propyl acetate, tert-butyl acetate, methyl propionate, ethyl propionate, propyl propionate, $\gamma$-butyrolactone, decanolide, valerolactone, mevalonolactone, caprolactone, methyl formate, and combinations thereof.

Examples of the ether compound are dibutyl ether, tetraglyme, diglyme, 1,2-dimethoxyethane, 1,2-diethoxyethane, ethoxymethoxy ethane, 2-methyltetrahydrofuran, tetrahydrofuran, and combinations thereof.

Examples of the another organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, and combinations thereof.

An embodiment of this application further provides an electronic apparatus including the foregoing electrochemical apparatus. The electronic apparatus in some embodiments of this application is not particularly limited and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a drone, a lighting appliance, a toy, a game console, a clock, an electric tool, a flash lamp, a camera, a large household battery, a lithium-ion capacitor, and the like.

Some specific examples and comparative examples are listed below to better illustrate this application. Lithium-ion batteries are used as examples.

Comparative Example 1

Preparation of negative electrode plate: A copper foil was used as a current collector, artificial graphite was used as a negative electrode active material, and styrene-butadiene rubber and carboxymethyl cellulose were used as a binder. The negative electrode active material, the styrene-butadiene rubber, and sodium carboxymethyl cellulose were mixed at a mass percentage ratio of 98:1:1 and dispersed in the deionized water to form a slurry. The slurry was stirred to uniformity and then applied on the copper foil, followed by drying, to form a negative electrode active material layer with a thickness of 120 $\mu$m, and then followed by cold pressing and slitting, to obtain a negative electrode plate.

Preparation of positive electrode plate: A positive electrode active material lithium manganate, conductive carbon black, and a binder polyvinylidene fluoride (PVDF) were uniformly mixed at a mass percentage ratio of 94.8:2.8:2.4 in an N-methylpyrrolidone solvent system and fully stirred. The resulting mixture was applied onto an aluminum foil to obtain a positive electrode active material layer with a thickness of 80 $\mu$m, followed by drying and cold pressing, to obtain a positive electrode plate.

Preparation of separator: Polyacrylate was stirred to form a uniform slurry, and the slurry was applied onto two surfaces of a porous substrate (polyethylene), followed by drying, to form a separator.

Preparation of electrolyte: In an environment with a water content less than 10 ppm, lithium hexafluorophosphate and a non-aqueous organic solvent (a mass percentage ratio of ethylene carbonate (EC):diethyl carbonate (DEC):propylene carbonate (PC):propyl propionate (PP):vinylene carbonate (VC) was 20:30:20:28:2) were mixed at a mass percentage ratio of 8:92 to prepare an electrolyte with a lithium salt concentration of 1 mol/L.

Preparation of lithium-ion battery: The positive electrode plate, the separator, and the negative electrode plate were stacked in sequence so that the separator was disposed between the positive electrode plate and the negative electrode plate for separation, and winding was performed to obtain an electrode assembly. The electrode assembly was placed in an outer packaging aluminum-plastic film and was dehydrated at a temperature of 80°C. Then the above-mentioned electrolyte was injected, and packaging was performed, followed by processes such as formation, degassing, and shaping, to obtain a lithium-ion battery. The negative electrode active material layer exceeds the positive electrode active material layer by 8 mm at both ends in the length direction.

Example 1

For preparation of the lithium-ion battery, Example 1 was the same as Comparative Example 1 except for the preparation of the negative electrode plate. Only the differences are described below. A copper foil was used as a current collector, artificial graphite was used as a negative electrode active material, and styrene-butadiene rubber and carboxymethyl cellulose were used as a binder. The negative electrode active material, the styrene-butadiene rubber, and sodium carboxymethyl cellulose were mixed at a mass percentage ratio of 98: 1:1 and dispersed in the deionized water to form a slurry. The slurry was stirred into uniformity and then divided into two parts and applied on the copper foil, followed by drying, to form a first negative electrode active material layer and a second negative electrode active material layer respectively. The first negative electrode active material layer was the same as the second negative electrode active material layer in thickness, and the first negative electrode active material layer in a length direction exceeded the second negative electrode active material layer by 8 mm at both ends. A negative electrode plate was obtained after cold pressing and slitting. After the lithium-ion battery was obtained, a positive electrode active material layer was aligned with the second negative electrode active material layer, and the first negative electrode active material layer in the length direction exceeded the positive electrode active material layer by 8 mm at both ends.

Example 2

For preparation of the lithium-ion battery, Example 2 was the same as Example 1 except for the structure of the finally obtained lithium-ion battery. Specifically, after the lithium-ion battery was obtained, one end of the positive electrode active material layer in the length direction was aligned with a corresponding end of the second negative electrode active material layer, the other end of the positive electrode active material layer in the length direction exceeded a corresponding end of the second negative electrode active material layer by 2 mm, and the first negative electrode active material layer in the length direction exceeded the positive electrode active material layer by 8 mm at both ends.

Comparative Example 2

For preparation of the lithium-ion battery, Comparative Example 2 was the same as Example 1 in the structure of the finally obtained lithium-ion battery. Specifically, after the lithium-ion battery was obtained, the positive electrode active material layer in the length direction was indented at both ends by 8 mm relative to the corresponding ends of the second negative electrode active material layer, and the first negative electrode active material layer in the length direction exceeded the positive electrode active material layer by 8 mm at both ends.
In addition, in this application, the following methods were used to measure corresponding parameters.
Energy density test: Under the test condition of 25°C, the battery was charged to 4.45 V at 3C, then left standing for 30 min, discharged to 3 V at 1C, and left standing for 10 min. After the foregoing cycle was repeated 1000 times, the volume of the lithium-ion battery was equal to length * width * thickness, the energy density of the lithium-ion battery was calculated from the energy and the volume of the lithium-ion battery: energy density = energy/volume.
Under 25°C, the lithium-ion battery was directly charged to the rated voltage of 4.48 V at a constant current of 0.5C, and then charged to a current of 0.02C at a constant voltage. At that point, the lithium-ion battery was left standing for 30 min. Then, the lithium-ion battery was discharged to 3 V at 0.2C, and the discharge time was recorded. The capacity of the lithium-ion battery was the discharge capacity of the lithium-ion battery in the process, where discharge capacity = discharge current * time. The energy of the lithium-ion battery was equal to $\int I * t \, dV$ (where I is current, t is time, and V is voltage). The length, width, and height of the lithium-ion battery were measured using a vernier caliper, and the volume of the lithium-ion battery was equal to length * width * thickness.

$$\text{Cycling capacity retention rate} = \text{discharge capacity of the 1000th}$$

$$\text{cycle/discharge capacity of the 1st cycle.}$$

Determining criteria of edge bulging: In the edge thickness test, edge bulging is determined if thicknesses of all 10 points measured using the multimeter are greater than the thickness of the middle body.
Table 1 shows parameters and evaluation results of Examples 1 to 3 and Comparative Example 1.

Table 1

| Group | Capacity | Volume | Energy density | Cycling capacity retention rate | Edge bulging |
|---|---|---|---|---|---|
| Comparative Example 1 | 4800 mAh | 0.0246 L | 760 Wh/L | 80% | Yes |
| Example 1 | 4800 mAh | 0.0245 L | 765 Wh/L | 80% | No |
| Example 2 | 4750 mAh | 0.0245 L | 755 Wh/L | 70% | No |
| Comparative Example 2 | 4800 mAh | 0.0246 L | 760 Wh/L | 80% | Yes |

In Comparative Example 1, a single negative electrode active material layer exceeds the positive electrode active material layer at both ends, and the exceeding portion of the negative electrode active material layer t provides no capacity and has a specific thickness. This affects the thickness of the lithium-ion battery and is likely to cause edge bulging of the negative electrode plate.
In Example 1, the first negative electrode active material layer exceeds the second negative electrode active material layer at both ends, and the two ends of the second negative electrode active material layer are aligned with the two ends of the positive electrode active material layer, alleviating edge bulging and reducing the thickness and volume of the lithium-ion battery, thereby improving the energy density of the lithium-ion battery. In Example 2, the positive electrode active material layer is aligned with the second negative electrode active material layer at one end, the other end of the positive electrode active material layer exceeds the corresponding end of the second negative electrode active material layer, and the first negative electrode active material layer exceeds the positive electrode active material layer at both ends, alleviating edge bulging and reducing the thickness of the lithium-ion battery. However, precipitation of lithium may occur at an end of the second negative electrode active material layer, where the second negative electrode active material layer is indented relative to the positive electrode active material layer at that end. In addition, at an end of the negative electrode plate, the positive electrode plate may release less lithium to saturate the negative electrode plate, where the second negative electrode active material layer is indented relative to the positive electrode active material layer at that end. Therefore, the charge capacity is reduced, and the discharge capacity is also reduced, reducing the overall capacity of the lithium-ion battery. Furthermore, although the thickness of the lithium-ion battery is reduced, the energy density of the lithium-ion battery is also reduced. In addition, the second negative electrode active material layer being indented relative to the positive electrode active material layer increases the risk of precipitation of lithium at the negative electrode plate, causing safety problems.

In Comparative Example 2, two negative electrode active material layers are applied, which produces the same result as the application of one single negative electrode active material layer because the first negative electrode active material layer and the second negative electrode active material layer are aligned. As a result, neither the thickness is reduced nor edge bulging is alleviated.

The foregoing descriptions are only preferred embodiments of this application and explanations of the applied technical principles. Persons skilled in the art should understand that the related scope disclosed in this application is not limited to the technical solutions formed by a specific combination of the foregoing technical characteristics, and should also cover other technical solutions formed by any combinations of the foregoing technical features or their equivalent features, for example, technical solutions formed by replacement between the foregoing features and technical features having similar functions as disclosed in this application.

**Claims**

1. An electrochemical apparatus, comprising:

   a positive electrode plate, wherein the positive electrode plate comprises a positive electrode active material layer; and
   a negative electrode plate, wherein the negative electrode plate comprises a negative electrode current collector, a first negative electrode active material layer and a second negative electrode active material layer, and the first negative electrode active material layer is provided between the negative electrode current collector and the second negative electrode active material layer; wherein
   in a length direction of the negative electrode plate, the first negative electrode active material layer has a first edge and a second edge, the second negative electrode active material layer has a third edge and a fourth edge, and the positive electrode active material layer has a fifth edge and a sixth edge, the first edge, the third edge, and the fifth edge being located on one side, and the second edge, the fourth edge, and the sixth edge being located on the opposite side;
   the first edge exceeds the third edge and the fifth edge in the length direction; and
   a distance between the third edge and the fifth edge in the length direction is less than 2 mm.

2. The electrochemical apparatus according to claim 1, wherein the distance between the third edge and the fifth edge in the length direction is 0.

3. The electrochemical apparatus according to claim 1, wherein the second edge exceeds the fourth edge and the sixth edge in the length direction.

4. The electrochemical apparatus according to claim 3, wherein a distance between the fourth edge and the sixth edge in the length direction is less than 2 mm.

5. The electrochemical apparatus according to claim 4, wherein the distance between the fourth edge and the sixth edge in the length direction is 0.

6. The electrochemical apparatus according to claim 1, wherein a thickness of the second negative electrode active material layer is greater than a thickness of the first negative electrode active material layer.

7. The electrochemical apparatus according to claim 1, wherein the first negative electrode active material layer and the second active material layer further comprise a negative electrode active material, and the negative electrode active material comprises at least one of graphite or silicon-based material.

8. The electrochemical apparatus according to claim 1, wherein a distance between the first edge and the fifth edge in the length direction is 2 mm to 8 mm.

9. The electrochemical apparatus according to claim 3, wherein a distance between the second edge and the sixth edge in the length direction is 2 mm to 8 mm.

10. An electronic apparatus, comprising the electrochemical apparatus according to any one of claims 1 to 9.

FIG. 1

FIG. 2

## INTERNATIONAL SEARCH REPORT

International application No.

**PCT/CN2022/140581**

| A. | CLASSIFICATION OF SUBJECT MATTER |
|----|----|

H01M4/13(2010.01)i;H01M10/0525(2010.01)i;H01M10/0587(2010.01)i

According to International Patent Classification (IPC) or to both national classification and IPC

| B. | FIELDS SEARCHED |
|----|----|

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

WPABS, WPABSC, CNKI, CNTXT, ENTXT, ENTXTC: 涂层, 材料层, 长, 长度, 尺寸, 大于, 两层, 双层, 第2, 第二, 第一, 电极, 负极, 极片, 阳极, 阴极, 正极, coating, material layer, length, dimension, larger than, double, bilayer, second, first, electrode, negative, pole piece, anode, cathode, positive

| C. | DOCUMENTS CONSIDERED TO BE RELEVANT |
|----|----|

| Category* | Citation of document, with indication, where appropriate, of the relevant passages | Relevant to claim No. |
|-----------|-----------------------------------------------------------------------------------|----------------------|
| X | CN 108780877 A (NEC ENERGY DEVICES LTD.) 09 November 2018 (2018-11-09) description, paragraphs 2-112, and figures 1a-3 | 1-10 |
| X | CN 108183264 A (LISHEN BATTERY (SUZHOU) CO., LTD.) 19 June 2018 (2018-06-19) description, paragraphs 2-67, and figures 1-7 | 1-10 |
| PX | CN 114649499 A (NINGDE NEW ENERGY SCIENCE AND TECHNOLOGY LTD. CO.) 21 June 2022 (2022-06-21) description, paragraphs [0003]-[0058] | 1-10 |
| A | JP 2013243097 A (TOYOTA MOTOR CORP.) 05 December 2013 (2013-12-05) entire document | 1-10 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|----|----|----|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|----|----|
| **27 February 2023** | **01 March 2023** |

| Name and mailing address of the ISA/CN | Authorized officer |
|----|----|
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/140581**

| Patent document cited in search report | | | Publication date (day/month/year) | Patent family member(s) | | | Publication date (day/month/year) |
|---|---|---|---|---|---|---|---|
| CN | 108780877 | A | 09 November 2018 | WO | 2017154312 | A1 | 14 September 2017 |
| | | | | JPWO | 2017154312 | A1 | 24 January 2019 |
| | | | | US | 2020295345 | A1 | 17 September 2020 |
| CN | 108183264 | A | 19 June 2018 | None | | | |
| CN | 114649499 | A | 21 June 2022 | None | | | |
| JP | 2013243097 | A | 05 December 2013 | None | | | |

Form PCT/ISA/210 (patent family annex) (July 2022)

**REFERENCES CITED IN THE DESCRIPTION**

**Patent documents cited in the description**

- CN 202210189715